# EUROPEAN PATENT SPECIFICATION

(11) **EP 3 128 781 B1**
(45) Date of publication and mention of the grant of the patent: **10.03.2021**
(21) Application number: 14888423.2
(22) Date of filing: 14.07.2014
(51) Int. Cl.: H04W 24/04

(54) **NETWORK ANOMALY DETECTION AND PROCESSING METHOD AND DEVICE AND COMPUTER STORAGE MEDIUM**
NETZWERKANOMALIEDETEKTIONS- UND -VERARBEITUNGSVERFAHREN UND -VORRICHTUNG UND COMPUTERSPEICHERMEDIUM
PROCÉDÉ ET DISPOSITIF DE DÉTECTION ET DE TRAITEMENT D'ANOMALIES DE RÉSEAU ET SUPPORT DE STOCKAGE INFORMATIQUE

(30) Priority: 01.04.2014 CN 201410132388
(43) Date of publication of application: 08.02.2017
(73) Proprietor: ZTE Corporation, Shenzhen city, Guangdong 518057 (CN)
(72) Inventor: XU, Qianqian, Shenzhen Guangdong 518057 (CN)
(74) Representative: Petraz, Davide Luigi
(86) International application number: PCT/CN2014/082172
(87) International publication number: WO 2015/149444

(56) References cited:
- EP-A1- 2 512 199
- EP-A1- 2 699 035
- EP-A2- 1 460 790
- CN-A- 102 067 655
- CN-A- 102 143 522
- US-A1- 2003 119 516

## Description

### TECHNICAL FIELD

The present disclosure relates to the field of mobile communication, and more particularly, to a method, device and computer storage medium for detecting and processing a network anomaly.

### BACKGROUND

With development of the mobile communication network, operators put more emphasis on network performance indexes. When a plurality of terminals access a base station for scheduling via a communication link, if an anomaly occurs in the wireless link, and the base station has no effective method for detecting and processing the anomaly, the network throughput would decrease sharply, and an efficiency of the network spectral would reduce, which goes against a stability of the network. The method for detecting and processing the anomaly is a method for efficiently and timely detecting exceptional problems in the network and providing a corresponding processing manner, so as to reduce an impact on the network performance by the network anomaly to an extreme.

The network performance indexes include a scheduling performance index, a measuring performance index, and the like. The scheduling performance index is mainly measured by a scheduling feedback of the link. The scheduling feedback refers to a feedback on a correctness of data sending. If the receiving terminal correctly receives the sent data, then an acknowledgement (ACK) is fed back to the sending terminal; otherwise, a negative acknowledgement (NACK) is fed back to the sending terminal. After receiving the NACK, the sending terminal will retransmit the data package which feeds back the NACK. If the retransmission has been performed for a certain number of times, and the receiving terminal still does not correctly receive the data package, then this data package will be discarded. The scheduling performance index may be a scheduling packet error ratio, a scheduling packet loss rate, a number of consecutive lost packet, a number of consecutive error packet, and the like. The scheduling packet error ratio refers to a ratio between scheduling packets feeding back the NACK among the scheduling packets and all of the scheduling packets. The scheduling packet loss rate refers to a ratio between newly transmitted packets which feed back the NACK during multiple times of scheduling and all of the scheduling packets. The number of consecutive error packet refers to a number of times of feeding back the NACK continuously during the scheduling. The number of consecutive lost packet refers to a number of times of continuous scheduling failure of the newly transmitted packet. The measuring performance index is mainly measured by measuring values of uplink and downlink measuring signals, such as a measuring value of a sounding reference signal (SRS), and a reported value of a channel quality indicator (CQI).

EP 2512199 discloses a communication system, mobile station device, and wireless link state management method, wherein the mobile station device changes radio link states of other uplink or downlink frequency bands when the radio link state of a link frequency band becomes a component carrier failure.

Although there is the method for detecting a network anomaly in the related art, the network anomaly due to different performance index decreases of the uplink and downlink of the network cannot be detected completely and correctly, and there is no a targeted process on the anomaly, thereby the role of improving the network performance is not apparent.

This section provides background information related to the present disclosure which is not necessarily prior art.

### SUMMARY

For solving the existing technical problems, the embodiments of the present disclosure provide a method for detecting and processing a network anomaly according to claim 1, a base station for detecting and processing a network anomaly according to claim 7, and a computer storage medium for detecting and processing a network anomaly according to claim 11.

By using the technical solutions of the embodiments of the present disclosure, the status of the uplink or downlink may be recognized accurately, the types of the status may be determined, and a corresponding process is performed according to the determined result; in this way, an impact on the scheduling of normal links in a cell is avoided, a reduction of the network performance due to the network anomaly is avoided as far as possible, and the impact on the network performance by the network anomaly is reduced to an extreme.

This section provides a summary of various implementations or examples of the technology described in the disclosure, and is not a comprehensive disclosure of the full scope or all features of the disclosed technology.

### BRIEF DESCRIPTION OF THE DRAWINGS

Fig. 1 is a flow chart of a method for detecting and processing a network anomaly according to an embodiment of the present disclosure;
Fig. 2 is a flow chart of a method for detecting and processing a network anomaly according to a first embodiment of the present disclosure;
Fig. 3 is a flow chart of a method for detecting and processing a network anomaly according to a second embodiment of the present disclosure;
Fig. 4 is a flow chart of a method for detecting and processing a network anomaly according to a third embodiment of the present disclosure; and
Fig. 5 is a structure diagram of a device for detecting and processing a network anomaly according to a fourth embodiment of the present disclosure.

### DETAILED DESCRIPTION

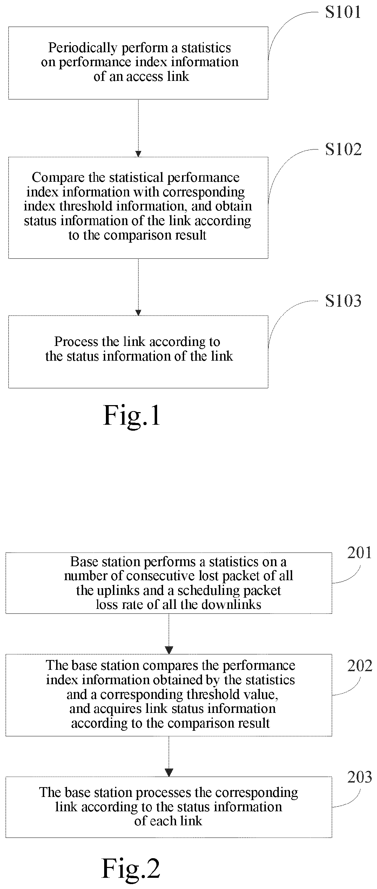

In various embodiments of the present disclosure, during operation, the base station may periodically collect and perform a statistics on performance index information of an access link, compare it with a preset threshold information to obtain link status information, and perform a corresponding process on the relevant link according to the link status information. Fig. 1 is a flow chart of a method for detecting and processing a network anomaly according to an embodiment of the present disclosure. The steps in the method disclosed by the embodiment of the present disclosure are shown in Fig. 1. The method includes the following steps.

In step S101, a base station periodically performs a statistics on performance index information of an access link.

In step S102, the base station determines a status of the link according to the statistical performance index information and a threshold value corresponding to the corresponding performance index information.

Herein, the status of the link may be divided into the following several types depending on uplink and downlink: an uplink normal status, an uplink abnormal status, a downlink normal status, and a downlink abnormal status, wherein the uplink abnormal status may further be divided into an uplink observing status and an uplink exceptional status, and the downlink abnormal status may be divided into a downlink observing status and a downlink exceptional status. The uplink observing status and the downlink observing status indicate that it is not yet completely determined that the link is exceptional, but the link only has a tendency to be exceptional.

In particular, the base station performs a statistics on performance index information of a specific link. When a value corresponding to the performance index information falls into a corresponding threshold range, the status of the link is the status corresponding to the specific threshold range.

The threshold range may be set according to a network performance requirement and a statistical manner.

The threshold may include the following several types: a normal threshold, and an abnormal threshold, and the abnormal threshold may particularly be divided into an observing period threshold and an exceptional threshold.

These types of thresholds may be separately provided based on the uplink and the downlink. The normal threshold is a threshold for determining whether the link is normal, and the link within this threshold range has a normal status.

The abnormal threshold is a threshold relative to the normal threshold, and for the link whose performance index reaches to the range of the abnormal threshold, the status of the corresponding link may be regarded as abnormal.

The abnormal threshold may also be particularly divided into an observing period threshold and an exceptional threshold.

The observing period threshold is a threshold for determining whether it is needed to continue to perform a statistics on relevant information for the link. The link reaching to this threshold range is a link having a possibility of being exceptional, and it is required to continue to perform a statistics on relevant information so as to determine the status of the link.

The exceptional threshold is a threshold for determining whether the link is exceptional, and the link reaching to this threshold is determined to be an exceptional link. The exceptional threshold may further be divided into a directly determined exceptional threshold, or may be an exceptional threshold determined when the performance of the link is not better after several observing periods.

The above threshold range information may be scheduling performance information or measuring performance information of the uplink and the downlink.

The threshold range information may be set to be periodic. The period may be a period having a certain time, or may be a period during which a certain number of data packets are collected. For example, 2S is used as one period, or sending 100 data packets may be used as one period. Moreover, the periods of different links and different types of information may be the same or may be different.

The particular setting of the threshold value may be implemented by configuring the threshold value according to a strategy of the operator in a specific area and saving it in the base station. For example, in the LTE network performance indexes, a threshold of the scheduling packet error ratio is generally required to be 10%, and a threshold of the scheduling packet loss rate is generally 1%. If the requirement for the network performance is high, an improvement may be made on the basis of the basic performance index, so as to restrict the scheduling resource for the link having a poor scheduling performance as soon as possible, make the exceptional link access again or release the exceptional link, and ensure the requirement for the network performance. At this time, the uplink normal threshold may be set to have the scheduling packet error ratio of 6%, the threshold for directly determining the uplink to be exceptional is set to have the scheduling packet error ratio of 8%, the threshold for the uplink observing period is set to have the scheduling packet loss rate of 7%; the downlink normal threshold is set to have the scheduling packet loss rate of 0.6%, the threshold for the downlink observing period is set to have the scheduling packet loss rate of 0.6%-0.8%, and the downlink exceptional threshold is set that consecutive 5 periods are used as the observing period. The statistical period of the threshold information of the uplink and the downlink may be a time period, or may be a period during which a certain data packets are transmitted via the link, and the statistical periods of the uplink and the downlink having different threshold indexes may be the same or different.

For a situation in which the requirement for the network performance index is not high, the threshold value may be reduced to an extent on the basis of the basic performance index. For example, in the LTE network performance indexes, the threshold of the scheduling packet error ratio is generally required to be 10%, and the threshold of the scheduling packet loss rate is generally 1%. In a specific area, the requirement for the network performance index by the operator is not high, thereby the index may be reduced properly according to the strategy of the operator. The uplink normal threshold may be set to have the scheduling packet loss rate of 12%, the uplink abnormal threshold may be set to have the scheduling packet loss rate of 15%, the downlink normal threshold may be set to have the scheduling packet error ratio of 1.3%, and the downlink abnormal threshold may be set to have the scheduling packet error ratio of 1.6%. Similarly, the statistical period of the threshold information of the uplink and the downlink may be a time period, or may be a period during which a certain data packets are transmitted via the link, and the statistical periods of the uplink and the downlink having different threshold indexes may be the same or different.

In step S103, the base station processes the link according to the status information of the link.

Herein, the base station continues to perform the statistics on the uplink or the downlink in the normal status, and does not process the corresponding link.

According to an aspect of the embodiments of the present disclosure, the base station restricts the scheduling resource for the link in the observing status, and restricts the scheduling of the corresponding link; and at the same time, the base station unidirectionally restricts the scheduling resource, i.e., for the link in the uplink observing status, only the uplink scheduling resource of this link is restricted, and for the link in the downlink observing status, only the downlink scheduling resource of this link is restricted. While restricting the scheduling resource of the corresponding link, the statistics on relevant information of the corresponding link is continued to be performed. For a link being in an observing status and then restoring to a normal status in a following statistical period, this link is regarded as a normal link and is processed; if the link does not restore to be normal in the following statistical period, it is further determined whether the link reaches to an exceptional threshold; for the link reaching to the exceptional threshold, this link is regarded as an exceptional link and is processed; and for the link which neither restores to be normal nor is determined to reach to the exceptional threshold in the following statistical period, this link is regarded as a link in an abnormal status and is continued to be processed.

According to another aspect of the embodiments of the present disclosure, for a link having a normal status, the base station continues to perform a statistics on the performance index of this link; for a link having an exceptional status, the base station triggers the link to access again or to be released; for a link in the observing status, the base station restricts the scheduling resource of the link; for a link being in the observing status and then restoring to be normal in the following statistical period, the base station processes this link by regarding it as the link having the normal status; for the link being in the observing status and then reaching to an exceptional threshold in the subsequent statistical period, the base station makes the link access again or be released; and for the link being in the observing status and then neither restoring to be normal nor being determined to reach to the exceptional threshold in the following statistical period, the base station continues to process this link by regarding it as the link in the observing status.

For the uplink or the downlink which is determined to be in the exceptional status, the base station adopts a strategy of triggering the corresponding link to access the base station again or directly releasing the link. For the link which accesses the base station again, if the link accesses the base station again successfully, a statistics on the performance index information of the link is performed again in a next period, and the link is regarded as a new link and is processed; and if the link accesses the base station unsuccessfully, the link is directly released.

For the link determined to be abnormal, the base station regards the link as the link in the observing status and processes it.

The next scheduling period repeats the above step S101 to step S103.

The embodiments of the present disclosure also provide a computer storage medium, storing with computer-executable instructions, wherein the computer-executable instructions are configured to perform the method of detecting and processing a network anomaly according to the embodiments of the present disclosure.

Hereinafter, detailed description to the present disclosure will be given by specific embodiments in combination with the drawings.

A first embodiment is a method for detecting and processing a network anomaly by utilizing the statistical performance index information by a base station. Fig. 2 is a flow chart of a method for detecting and processing a network anomaly according to the first embodiment of the present disclosure. As shown in Fig. 2, the method includes the following steps.

In step 201, the base station performs a statistics on a number of consecutive lost packet of all the uplinks and a scheduling packet loss rate of all the downlinks. Taking a base station having 6 links as an example, all the statistical link information at present are as follows. The statistical results of the uplink are as follows:
Link 1: the number of consecutive lost packet is 5;
Link 2: the number of consecutive lost packet is 6; and
Link 3: the number of consecutive lost packet is 20.

In the downlink, one statistical period is a period during which 100 packets are sent.
Link 1: a probability of scheduling and feeding back NACK in the current scheduling window is 15%;
Link 2: a probability of scheduling and feeding back NACK in the current scheduling window is 45%; and
Link 3: when being in the observing status and consecutive 4 scheduling windows being in the observing period, a probability of scheduling and feeding back NACK in the current scheduling window is 70%.

In step 202, the base station compares the performance index information obtained by the statistics with a corresponding threshold value, and acquires link status information according to the comparison result.

Herein, the performance index information of the uplink is a number of consecutive lost packet, and then the threshold values corresponding to the performance index information of the uplink are as follows:
the threshold value for the normal status is 10 times, i.e., when the packet is not lost for continuous 10 times or less than 10 times, the uplink is determined to be in the normal status;
the threshold value for the observing status is 20 times, i.e., when the packet is lost for continuous 20 times or more than 20 times, the uplink is determined to be in the observing status; and
the threshold value for the exceptional status is 60 times, i.e., when the packet is lost for continuous 60 times or more than 60 times, the uplink is determined to be in the exceptional status.

Herein, the performance index information of the downlink is a probability of scheduling and feeding back NACK, and the statistical period of the probability is a period during which 100 scheduling packets are sent, then the threshold values corresponding to the performance index information of the downlink are as follows:
the threshold value for the normal status is 20%, i.e., when less than 20 scheduling packets among 100 scheduling packets feed back NACK, the downlink is determined to be in the normal status;
the threshold value for the observing status is 40%, i.e., when more than 40 scheduling packets among 100 scheduling packets feed back NACK, the downlink is determined to be in the observing status; and
the threshold value for the exceptional status is that consecutive 5 scheduling windows are in the observing period, i.e., in the consecutive 500 packets, when more than 40 scheduling packets among every 100 scheduling packets feed back NACK, the downlink is determined to be in the exceptional status.

According to the statistical result in the step 201 and the corresponding threshold values, the statues of the corresponding links are as follows:

### Uplink:

Link 1: in the normal status;
Link 2: in the normal status; and
Link 3: in the observing status.

### Downlink:

Link 1: in the normal status;
Link 2: in the observing status; and
Link 3: in the exceptional status.

In step 203, the base station processes the corresponding link according to the status information of each link.

Herein, the corresponding process manners according to the link statuses determined in the step 202 are:

### Uplink:

Link 1: continue to perform the statistics on the performance index information of the link;
Link 2: continue to perform the statistics on the performance index information of the link; and
Link 3: enter an observing period, restrict the downlink scheduling resource of the link, and in a subsequent statistical period, continue to perform the statistics on the performance index information of the link and determine the status of the link.

### Downlink:

Link 1: continue to perform the statistics on the performance index information of the link;
Link 2: enter an observing period, restrict the downlink scheduling resource of the link, and in the subsequent statistical period, continue to perform the statistics on the performance index information of the link and determine the status of the link; and
Link 3: make the link access again, if the link accesses again successfully, perform again the statistics on the performance index information of the link, and repeat the step 201 to the step 203; and if the link accesses again unsuccessfully, release the link directly.

The embodiments of the present disclosure also provide a computer storage medium, storing with computer-executable instructions, wherein the computer-executable instructions are configured to perform the method of detecting and processing a network anomaly according to the embodiments of the present disclosure.

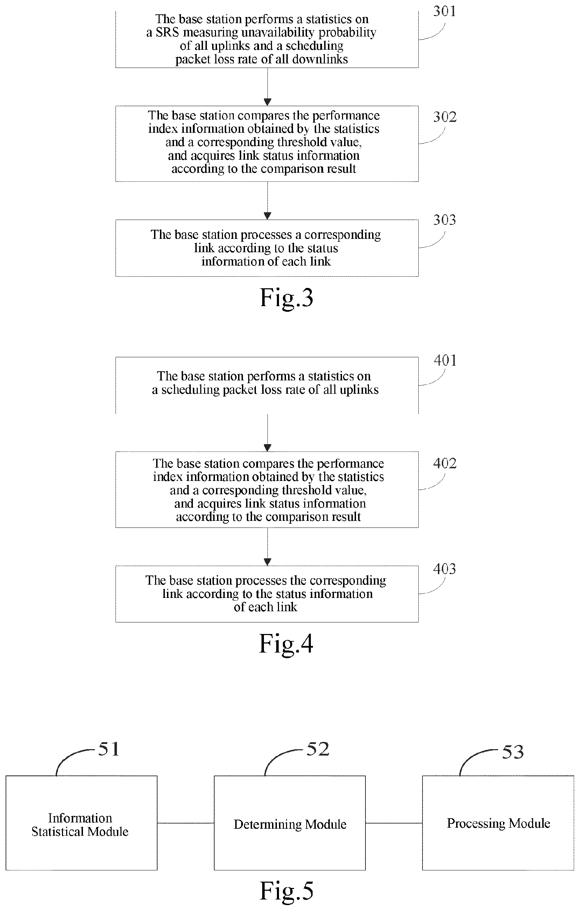

A second embodiment is a method for detecting and processing a network anomaly by utilizing the statistical performance index information by a base station. Fig. 3 is a flow chart of a method for detecting and processing a network anomaly according to the second embodiment of the present disclosure. As shown in Fig. 3, the method includes the following steps.

In step 301, the base station performs a statistics on a SRS measuring unavailability probability of all uplinks and a scheduling packet loss rate of all downlinks.

Taking a base station having 6 links as an example, all the statistical link information at present are as follows.

For example, in the uplink, one statistical window is a window during which a statistics on 100 SRS measuring values is performed, in this case, the statistical results of the uplink are as follows:
Link 1: the SRS measuring unavailability probability in the current statistical window is 35%;
Link 2: the SRS measuring unavailability probability in the current statistical window is 15%; and
Link 3: when being in an observing status and consecutive 4 statistical windows being in an observing period, the SRS measuring unavailability probability in the current statistical window is 70%.

In the downlink, one statistical window is a window during which a statistics on 100 newly transmitted data packets is performed.
Link 1: a packet loss probability in the current scheduling window is 5%;
Link 2: a packet loss probability in the current scheduling window is 45%; and
Link 3: a packet loss probability in the current scheduling window is 20%.

In step 302, the base station compares the performance index information obtained by the statistics with a corresponding threshold value, and acquires link status information according to the comparison result.

Herein, the performance index information of the uplink is a SRS measuring validity proportion. By using a manner of performing the statistics by cutting windows, one statistical window includes 100 SRS measuring values, threshold values corresponding to the performance index information of the uplink are as follows:
the threshold value for the normal status is 20%, i.e., when less than 20 measuring values among 100 measuring values are invalid, the uplink is determined to be in the normal status;
the threshold value for the observing status is 30%, i.e., when more than 30 measuring values among 100 measuring values are invalid, the uplink is determined to be in the observing status; and
the threshold value for the exceptional status is that consecutive 5 statistical windows are in the observing period, i.e., in the consecutive 500 measuring values, when more than 30 measuring values among every 100 measuring values are invalid, the uplink is determined to be in the exceptional status.

Herein, the performance index information of the downlink is a downlink packet loss probability. The downlink packet loss probability is obtained by using a manner of performing the statistics by cutting windows, one statistical window includes 100 newly transmitted data packets, then threshold values corresponding to the performance index information of the downlink are as follows:
the threshold value for the normal status is 20%, i.e., when less than 20 data packets among 100 data packets are lost, the downlink is determined to be in the normal status;
the threshold value for the observing status is 30%, i.e., when more than 30 data packets among 100 data packets are lost, the downlink is determined to be in the observing status; and
the threshold value for the exceptional status is that consecutive 5 statistical windows are in the observing period, i.e., in the consecutive 500 data packets, when more than 30 data packets among every 100 data packets are lost, the downlink is determined to be in the exceptional status.

According to the statistical results in the step 301 and the corresponding threshold values, the statuses of the corresponding links are as follows:

### Uplink:

Link 1: in an observing status;
Link 2: in a normal status; and
Link 3: in an exceptional status.

### Downlink:

Link 1: in a normal status;
Link 2: in an observing status; and
Link 3: in a normal status.

In step 303, the base station processes a corresponding link according to the status information of each link.

Herein, corresponding process manners according to the link statuses determined in the step 302 are:

### Uplink:

Link 1: enter an observing period, continue to perform a statistics on the performance index information of the link in the subsequent statistical period and determine the status of the link;
Link 2: in the normal status, continue to perform the statistics on the performance index information of the link; and
Link 3: in the exceptional status, and directly release the link.

### Downlink:

Link 1: in the normal status, continue to perform the statistics on the performance index information of the link;
Link 2: enter an observing period, restrict the downlink scheduling resource of the link, and in the subsequent statistical period, continue to perform the statistics on the performance index information of the link and determine the status of the link; and
Link 3: in the normal status, continue to perform the statistics on the performance index information of the link.

The embodiments of the present disclosure also provide a computer storage medium, storing with computer-executable instructions, wherein the computer-executable instructions are configured to perform the method of detecting and processing a network anomaly according to the embodiments of the present disclosure.

Fig. 4 is a flow chart of a method for detecting and processing a network anomaly according to a third embodiment of the present disclosure. As shown in Fig. 4, the method includes the following steps.

In step 401, the base station performs a statistics on a scheduling packet loss rate of all uplinks.

In the present embodiment, taking the base station having 3 uplinks as an example, all the statistical link information at present are as follows.

One statistical period in the uplink is performing a statistics on the newly transmitted data packets within 2S.
Link 1: a packet loss rate in the current period is 5%;
Link 2: a packet loss rate in the current period is 45%; and
Link 3: a packet loss rate in the current period is 20%.

In step 402, the base station compares the performance index information obtained by the statistics with a corresponding threshold value, and acquires link status information according to the comparison result.

Herein, the performance index information of the uplink is an uplink packet loss rate in one statistical period, then threshold values corresponding to the performance index information of the uplink are as follows:
the threshold value for the normal status is 10%, i.e., when the packet loss rate of the newly transmitted data packets in 2S is lower than 10%, the link is determined to be in the normal status;
the threshold value for the abnormal status is 15%, i.e., when the packet loss rate of the newly transmitted data packets in 2S is higher than 15%, the link is determined to be in the abnormal status.

According to the statistical results in the step 401 and the corresponding index thresholds, the statuses of the corresponding links are as follows:

### Uplink:

Link 1: in a normal status;
Link 2: in an abnormal status; and
Link 3: in an abnormal status.

In step 403, the base station processes the corresponding link according to the status information of each link.

Herein, the corresponding process manners according to the link statuses determined in the step 402 are:
Link 1: in a normal status, continue to perform the statistics on the performance index information of the link;
Link 2: enter an observing period, restrict the downlink scheduling resource of the link, and in the subsequent statistical period, continue to perform the statistics on the performance index information of the link and determine the status of the link; and
Link 3: enter an observing period, restrict the downlink scheduling resource of the link, and in the subsequent statistical period, continue to perform the statistics on the performance index information of the link and determine the status of the link.

The embodiments of the present disclosure also provide a computer storage medium, storing with computcr-cxccutablc instructions, wherein the computcr-cxccutablc instructions arc configured to perform the method of detecting and processing a network anomaly according to the embodiments of the present disclosure.

Fig. 5 is a structure diagram of a device for detecting and processing a network anomaly according to a fourth embodiment of the present disclosure. As shown in Fig. 5, the device includes: an information statistical module 51, a determining module 52, and a processing module 53.

The information statistical module 51 is configured to periodically perform a statistics on performance index information of an access link.

The determining module 52 is configured to determine a status of the link according to the statistical performance index information obtained by the information statistical module 51 and a threshold value corresponding to the performance index information.

The processing module 53 is configured to process the link according to the status of the link determined by the determining module 52.

According to an aspect of the embodiments of the present disclosure, the information statistical module 51 is configured to perform the statistics on the performance index information of the access link by using a preset time as a period, or perform the statistics on the performance index information of the access link by using a preset number of data packets as a period.

According to another aspect of the embodiments of the present disclosure, the processing module 53 is configured to, for a link with a normal status, continuously perform the statistics on the performance index information of the corresponding link; for a link with an abnormal status, restrict a scheduling resource of the link; for a link being in the abnormal status and then restoring to the normal status in a following statistical period, perform a process on the link by regarding the link as the link with the normal status; for a link being in the abnormal status and then reaching to an exceptional threshold in a following statistical period, make the link access again or release the link; and for a link being in the abnormal status and then neither restoring to the normal status nor reaching to the exceptional threshold in the following statistical period, continue to perform a process on the link by regarding the link as the link with the abnormal status.

According to another aspect of the embodiments of the present disclosure, the processing module 53 is configured to, for a link with a normal status, continue to perform the statistics on the performance index of the corresponding link; for a link with an exceptional status, trigger to make the link access again or release the link; for a link in an observing status, restrict a scheduling resource of the link; for a link being in the observing status and then restoring to the normal status in a following statistical period, perform a process by regarding the link as the link with the normal status; for a link being in the observing status and then reaching to an exceptional threshold in a following statistical period, make the link access again or release the link; and for a link being in the observing status and then neither restoring to the normal status nor reaching to the exceptional threshold, continue to perform a process by regarding the link as the link in the observing status.

According to another aspect of the embodiments of the present disclosure, the processing module 53 is configured to, for a link with a normal status, continue to perform the statistics on the performance index of the corresponding link; for a link with an exceptional status, trigger to make the link access again or release the link; for a link in an observing status, restrict a scheduling resource of the link; for a link being in the observing status and then restoring to the normal status in a following statistical period, perform a process on the link by regarding the link as the link with the normal status; for a link being in the observing status and then reaching to an exceptional threshold in a following statistical period, make the link access again or release the link; and for a link being in the observing status and then neither restoring to the normal status nor reaching to the exceptional threshold in the following statistical period, continue to perform a process on the link by regarding the link as the link in the observing status.

In the embodiments of the present disclosure, the device for detecting and processing a network anomaly may be achieved by a base station in actual applications. In actual applications, the information statistical module 51, the determining module 52, and the processing module 53 in the device may all be achieved by a Central Processing Unit (CPU), a Digital Signal Processor (DSP), or a Field Programmable Gate Array (FPGA) in the device. Through the explanations of the specific embodiments, the technical means adopted for achieving the predetermined purposes and the effects of the embodiments of the present disclosure may be understood more deeply and particularly. However, the drawings arc only used for reference and explanations, rather than restricting the present disclosure. Meanwhile, without conflict, the embodiments and the features in the embodiments may be combined with each other.

The person skilled in the art should understand, the embodiments of the present disclosure may be provided as methods, or computer program products. Thereby, the present disclosure may adopt forms of hardware embodiments, software embodiments, or embodiments combining the software and hardware aspects. Moreover, the present disclosure may adopt a form of computer program product implementing on one or more computer readable storage medium (which includes, but is not limited to a disk storage, an optical storage, and the like) containing computer readable program codes.

The present disclosure is illustrated with reference to the flow chart and/or the block diagram of the method and computer program product according to the embodiments of the present disclosure. It should be appreciated that each flow in the flow chart and/or each block in the block diagram and/or the combination of the flows in the flow chart and the blocks in the block diagram may be realized by computer program instructions. These computer program instructions may be provided to a general-purpose computer, a special purpose computer, an embedded processor or processors of other programmable data processing devices to generate a machine which makes the instructions executed by the processors of the computers or the processors of other programmable data processing devices generate a device for realizing the functions specified in one or more flows of the flow chart and/or one or more blocks in the block diagram.

These computer program instructions may also be stored in a computer-readable memory which is capable of guiding a computer or another programmable data processing device to work in a given manner, thereby enabling the instructions stored in the computer-readable memory to generate a product including an instruction device for realizing the functions specified in one or more flows of the flow chart and/or one or more blocks in the block diagram.

These computer program instructions may also be loaded to a computer or other programmable data processing devices to execute a series of operations thereon to generate the processing realized by the computer, so that the instructions executed by the computer or other programmable data processing devices offer the steps for realizing the functions specified in one or more flows of the flow chart and/or one or more blocks in the block diagram.

## Claims

1. A method for detecting and processing a network anomaly, the method comprising:
periodically performing (S101), by a base station, a statistics on performance index information of an access link;
determining (S102), by the base station, a status of the link according to the statistical performance index information and a threshold range corresponding to the performance index information, wherein the threshold range comprises a normal threshold range, and an abnormal threshold range, and the abnormal threshold range comprises an observing period threshold range and an exceptional threshold range,
when a value corresponding to the performance index information falls into a corresponding threshold range, the status of the link is the status of the corresponding threshold range, wherein when a value corresponding to the performance index information falls into a normal threshold range, the link is in a normal status, when a value corresponding to the performance index information falls into an observing period threshold range, the link is in an observing status, when a value corresponding to the performance index information falls into an exceptional threshold range, the link is in an exceptional status; and
processing (S103), by the base station, the link according to the determined status of the link;
wherein processing the link comprises:
for a link being in the normal status, continuously performing, by the base station, the statistics on the performance index information of the corresponding link;
for a link being in the observing status, restricting, by the base station, a resource used by the link and continuously performing, by the base station, the statistics on the performance index information of the corresponding link;
for a link being in the exceptional status, triggering, by the base station, the link to be re-accessed to the base station or to be released.

2. The method according to claim 1, further comprising:
for a link being in the observing status and then restoring to the normal status in a following period of statistics, performing accordingly by regarding this link as being in the normal status;
for a link being in the observing status and then reaching to the exceptional status in the following period of statistics, triggering the link to be re-accessed to the base station or to be released; and
for a link being in the observing status and then neither restoring to the normal status nor reaching to the exceptional status in the following period of statistics, performing accordingly by regarding this link as being in the observing status.

3. The method according to claim 1, in which the period of statistics is a preset time or a preset number of data packets.

4. The method according to claim 1, in which the performance index information is scheduling performance index information, or measuring performance index information, wherein the scheduling performance index information is information about correctness of data sending and the measuring performance index information is information about a value of measuring signals.

5. The method according to claim 4, in which the link comprises an uplink or a downlink.

6. The method according to claim 1, in which the triggering the link to be re-accessed comprises: when the link re-accessed successfully, performing the statistics on the performance index information of the link again in a next period of statistics; and when the link re-accessed unsuccessfully, directly releasing the link.

7. A base station for detecting and processing a network anomaly, the base station comprising:
an information statistical module (51) configured to periodically perform a statistics on performance index information of an access link;
a determining module (52) configured to determine a status of the link according to the statistical performance index information obtained by the information statistical module (51) and a threshold range corresponding to the performance index information, wherein the threshold range comprises a normal threshold range, and an abnormal threshold range, and the abnormal threshold range comprises an observing period threshold range and an exceptional threshold range,
when a value corresponding to the performance index information falls into a corresponding threshold range, the status of the link is the status of the corresponding threshold range, wherein when a value corresponding to the performance index information falls into a normal threshold range, the link is in a normal status, when a value corresponding to the performance index information falls into an observing period threshold range, the link is in an observing status, when a value corresponding to the performance index information falls into an exceptional threshold range, the link is in an exceptional status; and
a processing module (53) configured to process the link according to the status of the link determined by the determining module (52);
wherein the processing module (53) is further configured to:
for a link being in the normal status, continuously perform the statistics on the performance index information of the corresponding link;
for a link being in the observing status, restrict a resource used by the link and continuously performing the statistics on the performance index information of the corresponding link; and
for a link being in the exceptional status, trigger the link to be re-accessed to the base station or be released.

8. The base station according to claim 7, in which the processing module (53) is further configured to:
for a link being in the observing status and then restoring to the normal status in a following period of statistics, perform accordingly by regarding this link as being in the normal status;
for a link being in the observing status and then reaching to the exceptional status in the following period of statistics, trigger the link to be re-accessed to the base station or to be released; and
for a link being in the observing status and then neither restoring to the normal status nor reaching to the exceptional status in the following period of statistics, perform accordingly by regarding this link as being in the observing status.

9. The base station according to claim 7, in which the period of statistics is a preset time or a preset number of data packets.

10. The base station according to claim 7, in which the processing module (53) is configured to, when the link is re-accessed successfully, perform the statistics on the performance index information of the link again in a next period of statistics; and when the link is re-accessed unsuccessfully, directly release the link.

11. A computer storage medium, storing with computer-executable instructions, **characterized in that** the computer-executable instructions when executed by modules of a base station perform the method of detecting and processing a network anomaly according to any one of claims 1 to 6.

## Patentansprüche

1. Verfahren zur Detektion und Verarbeitung einer Netzwerkanomalie, wobei das Verfahren umfasst:
periodisches Durchführen (S101), durch eine Basisstation, einer Statistik über Leistungsindexinformationen eines Zugangslinks;
Bestimmen (S102), durch die Basisstation, eines Zustands des Links gemäß den statistischen Leistungsindexinformationen und einem Schwellenbereich, der den Leistungsindexinformationen entspricht, worin der Schwellenbereich einen normalen Schwellenbereich und einen anormalen Schwellenbereich umfasst, und der anormale Schwellenbereich einen Beobachtungszeitraum-Schwellenbereich und einen Ausnahme-Schwellenbereich umfasst,
wenn ein Wert, der den Leistungsindexinformationen entspricht, in einen entsprechenden Schwellenbereich fällt, ist der Zustand des Links der Zustand des entsprechenden Schwellenbereichs, worin, wenn ein Wert, der den Leistungsindexinformationen entspricht, in einen normalen Schwellenbereich fällt, das Link sich in einem normalen Zustand befindet, wenn ein Wert, der den Leistungsindexinformationen entspricht, in einen Beobachtungszeitraum-Schwellenbereich fällt, das Link sich in einem Beobachtungs-Zustand befindet, wenn ein Wert, der den Leistungsindexinformationen entspricht, in einen Ausnahme-Schwellenbereich fällt, das Link sich in einem Ausnahme-Zustand befindet; und
Verarbeiten (S103), durch die Basisstation, des Links gemäß dem bestimmten Zustand des Links;
worin das Verarbeiten des Links umfasst:
für ein Link, das im normalen Zustand ist, kontinuierliches Durchführen, durch die Basisstation, der Statistik über die Leistungsindexinformationen des entsprechenden Links;
für ein Link, das im Beobachtungs-Zustand ist, Einschränken, durch die Basisstation, einer Ressource, die vom Link benutzt wird, und kontinuierliches Durchführen, durch die Basisstation, der Statistik über die Leistungsindexinformationen des entsprechenden Links;
für ein Link, das im Ausnahme-Zustand ist, Auslösen, durch die Basisstation, dass das Link von der Basisstation wiederaufgerufen oder freigegeben wird.

2. Verfahren nach Anspruch 1, ferner umfassend:
für ein Link, das im Beobachtungs-Zustand ist und dann zum normalen Zustand in einem folgenden Statistik-Zeitraum zurückgestellt wird, Agieren dementsprechend, indem dieses Link als im normalen Zustand befindlich betrachtet wird;
für ein Link, das im Beobachtungs-Zustand ist und dann den Ausnahme-Zustand in dem folgenden Statistik-Zeitraum erreicht, Auslösen, dass das Link von der Basisstation wiederaufgerufen oder freigegeben wird; und
für ein Link, das im Beobachtungs-Zustand ist und dann weder zum normalen Zustand zurückgestellt wird noch den Ausnahme-Zustand in dem folgenden Statistik-Zeitraum erreicht, Agieren dementsprechend, indem dieses Link als im Beobachtungs-Zustand befindlich betrachtet wird.

3. Verfahren nach Anspruch 1, worin der Statistik-Zeitraum eine vorgegebene Zeit oder eine vorgegebene Anzahl von Datenpaketen ist.

4. Verfahren nach Anspruch 1, worin die Leistungsindexinformationen Terminplanungs-Leistungsindexinformationen oder Mess-Leistungsindexinformationen sind, worin die Terminplanungs-Leistungsindexinformationen Informationen über die Richtigkeit der Datensendung sind und die Mess-Leistungsindexinformationen Informationen über einen Wert von Messsignalen sind.

5. Verfahren nach Anspruch 4, worin das Link ein Uplink oder ein Downlink umfasst.

6. Verfahren nach Anspruch 1, worin das Auslösen, dass das Link wiederaufgerufen wird, umfasst: wenn das Link erfolgreich wiederaufgerufen wird, Durchführen der Statistiken über die Leistungsindexinformationen des Links wieder in einem nächsten Statistik-Zeitraum; und wenn das Link erfolglos wiederaufgerufen wird, direktes Freigeben des Links.

7. Basisstation zur Detektion und Verarbeitung einer Netzwerkanomalie, wobei die Basisstation umfasst:
ein Informationsstatistikmodul (51), das dazu eingerichtet ist, eine Statistik über Leistungsindexinformationen eines Zugangslinks periodisch durchzuführen;
ein Bestimmungsmodul (52), das dazu eingerichtet ist, einen Zustand des Links gemäß den statistischen Leistungsindexinformationen, die vom Informationsstatistikmodul (51) erhalten werden, und einen Schwellenbereich, der den Leistungsindexinformationen entspricht, zu bestimmen, worin der Schwellenbereich einen normalen Schwellenbereich und einen anormalen Schwellenbereich umfasst, und der anormale Schwellenbereich einen Beobachtungszeitraum-Schwellenbereich und einen Ausnahme-Schwellenbereich umfasst,
wenn ein Wert, der den Leistungsindexinformationen entspricht, in einen entsprechenden Schwellenbereich fällt, ist der Zustand des Links der Zustand des entsprechenden Schwellenbereichs, worin, wenn ein Wert, der den Leistungsindexinformationen entspricht, in einen normalen Schwellenbereich fällt, das Link sich in einem normalen Zustand befindet, wenn ein Wert, der den Leistungsindexinformationen entspricht, in einen Beobachtungszeitraum-Schwellenbereich fällt, das Link sich in einem Beobachtungs-Zustand befindet, wenn ein Wert, der den Leistungsindexinformationen entspricht, in einen Ausnahme-Schwellenbereich fällt, das Link sich in einem Ausnahme-Zustand befindet; und
ein Verarbeitungsmodul (53), das dazu eingerichtet ist, das Link gemäß dem Zustand des Links zu verarbeiten, das vom Bestimmungsmodul (52) bestimmt wird;
worin das Verarbeitungsmodul (53) ferner dazu eingerichtet ist:
für ein Link, das im normalen Zustand ist, die Statistik über die Leistungsindexinformationen des entsprechenden Links kontinuierlich durchzuführen;
für ein Link, das im Beobachtungs-Zustand ist, eine Ressource, die vom Link benutzt wird, einzuschränken und die Statistik über die Leistungsindexinformationen des entsprechenden Links kontinuierlich durchzuführen; und
für ein Link, das im Ausnahme-Zustand ist, auszulösen, dass das Link von der Basisstation wiederaufgerufen oder freigegeben wird.

8. Basisstation nach Anspruch 7, worin
das Verarbeitungsmodul (53) ferner dazu eingerichtet ist:
für ein Link, das im Beobachtungs-Zustand ist und dann zum normalen Zustand in einem folgenden Statistik-Zeitraum zurückgestellt wird, dementsprechend zu agieren, indem dieses Link als im normalen Zustand befindlich betrachtet wird;
für ein Link, das im Beobachtungs-Zustand ist und dann den Ausnahme-Zustand in dem folgenden Statistik-Zeitraum erreicht, auszulösen, dass das Link von der Basisstation wiederaufgerufen oder freigegeben wird; und
für ein Link, das im Beobachtungs-Zustand ist und dann weder zum normalen Zustand zurückgestellt wird noch den Ausnahme-Zustand in dem folgenden Statistik-Zeitraum erreicht, dementsprechend zu agieren, indem dieses Link als im Beobachtungs-Zustand befindlich betrachtet wird.

9. Basisstation nach Anspruch 7, worin der Statistik-Zeitraum eine vorgegebene Zeit oder eine vorgegebene Anzahl von Datenpaketen ist.

10. Basisstation nach Anspruch 7, worin das Verarbeitungsmodul (53) dazu eingerichtet ist, wenn das Link erfolgreich wiederaufgerufen wird, die Statistiken über die Leistungsindexinformationen des Links wieder in einem nächsten Statistik-Zeitraum durchzuführen; und wenn das Link erfolglos wiederaufgerufen wird, das Link direkt freizugeben.

11. Computerspeichermedium, in dem vom Computer ausführbare Anweisungen gespeichert sind, **dadurch gekennzeichnet, dass** die vom Computer ausführbaren Anweisungen, wenn sie von Modulen einer Basisstation ausgeführt werden, das Verfahren zur Detektion und Verarbeitung einer Netzwerkanomalie nach einem der Ansprüche 1 bis 6 durchführen.

## Revendications

1. Procédé de détection et de traitement d'un réseau anormal, le procédé comprenant :
la réalisation périodique (S101), par une station de base, des statistiques sur les informations d'indice de performance d'une liaison d'accès ;
la détermination (S 102), par la station de base, d'un état de la liaison selon les informations statistiques d'indice de performance et d'une plage de seuil correspondant aux informations d'indice de performance, où la plage de seuil comprend une plage de seuil normale et une plage de seuil anormale, et la plage de seuil anormale comprend une plage de seuil de période d'observation et une plage de seuil exceptionnelle,
lorsqu'une valeur correspondant aux informations d'indice de performance tombe dans une plage de seuil correspondante, l'état de la liaison est l'état de la plage de seuil correspondante, où lorsqu'une valeur correspondant aux informations d'indice de performance tombe dans une plage de seuil normale, la liaison est dans un état normal,
lorsqu'une valeur correspondant aux informations d'indice de performance tombe dans une plage de seuil de période d'observation,
la liaison est dans un état d'observation, lorsqu'une valeur correspondant aux informations d'indice de performance tombe dans une plage de seuil exceptionnelle, la liaison est dans un état exceptionnel ; et
le traitement (S 103), par la station de base, de la liaison en fonction de l'état déterminé de la liaison ;
où le traitement de la liaison comprend :
pour une liaison se trouvant dans l'état normal, la réalisation en continu, par la station de base, des statistiques sur les informations d'indice de performance de la liaison correspondante ;
pour une liaison se trouvant dans l'état d'observation, la restriction, par la station de base, d'une ressource utilisée par la liaison et la réalisation en continu, par la station de base, des statistiques sur les informations d'indice de performance de la liaison correspondante ;
pour une liaison se trouvant dans l'état exceptionnel, le déclenchement, par la station de base, de la liaison à réaccéder à la station de base ou à libérer.

2. Procédé selon la revendication 1, comprenant en outre :
pour une liaison se trouvant dans l'état d'observation et revenant ensuite à l'état normal dans une période suivante de statistiques, la réalisation en conséquence en considérant cette liaison comme se trouvant dans l'état normal ;
pour une liaison se trouvant dans l'état d'observation et atteignant ensuite l'état exceptionnel dans la période de statistiques suivante, le déclenchement de la liaison à réaccéder à la station de base ou à libérer ; et
pour qu'une liaison soit dans l'état d'observation et ensuite ne revienne pas à l'état normal ni n'atteigne l'état exceptionnel dans la période de statistiques suivante, la réalisation en conséquence en considérant cette liaison comme étant dans l'état d'observation.

3. Procédé selon la revendication 1, où la période de statistiques est un temps préétabli ou un nombre préétabli de paquets de données.

4. Procédé selon la revendication 1, où les informations d'indice de performance sont des informations d'indice de performance d'ordonnancement, ou des informations d'indice de performance de mesure, où les informations d'indice de performance d'ordonnancement sont des informations sur l'exactitude de l'envoi de données et les informations d'indice de performance de mesure sont des informations sur une valeur de signaux de mesure.

5. Procédé selon la revendication 4, où la liaison comprend une liaison montante ou une liaison descendante.

6. Procédé selon la revendication 1, où le déclenchement de la liaison à réaccéder comprend : lorsque la liaison a réaccédé avec succès, la réalisation à nouveau des statistiques sur les informations d'indice de performance de la liaison dans une période suivante de statistiques ; et lorsque la liaison a réaccédé sans succès, la libération directe de la liaison.

7. Station de base pour détecter et traiter une anomalie de réseau, la station de base comprenant :
un module statistique d'informations (51) configuré pour réaliser périodiquement des statistiques sur les informations d'indice de performance d'une liaison d'accès ;
un module de détermination (52) configuré pour déterminer un état de la liaison selon les informations d'indice de performance statistique obtenues par le module statistique d'informations (51) et une plage de seuil correspondant aux informations d'indice de performance,
où la plage de seuil comprend une plage de seuil normale, et une plage de seuil anormale, et la plage de seuil anormale comprend une plage de seuil de période d'observation et une plage de seuil exceptionnelle,
lorsqu'une valeur correspondant aux informations d'indice de performance tombe dans une plage de seuil correspondante, l'état de la liaison est l'état de la plage de seuil correspondante, où lorsqu'une valeur correspondant aux informations d'indice de performance tombe dans une plage de seuil normale, la liaison est dans un état normal, lorsqu'une valeur correspondant aux informations d'indice de performance tombe dans une plage de seuil de période d'observation, la liaison est dans un état d'observation, lorsqu'une valeur correspondant aux informations d'indice de performance tombe dans une plage de seuil exceptionnelle, la liaison est dans un état exceptionnel ; et
un module de traitement (53) configuré pour traiter la liaison selon l'état de la liaison déterminé par le module de détermination (52) ;
où le module de traitement (53) est en outre configuré pour :
pour une liaison se trouvant dans l'état normal, réaliser en continu les statistiques sur les informations d'indice de performance de la liaison correspondante ;
pour une liaison se trouvant dans l'état d'observation, restreindre une ressource utilisée par la liaison et réaliser en continu les statistiques sur les informations d'indice de performance de la liaison correspondante ; et
pour une liaison se trouvant dans l'état exceptionnel, déclencher la liaison à réaccéder à la station de base ou à libérer.

8. Station de base selon la revendication 7, où le module de traitement (53) est en outre configuré pour :
pour une liaison se trouvant dans l'état d'observation et revenant ensuite à l'état normal dans une période suivante de statistiques, réaliser en conséquence en considérant cette liaison comme se trouvant dans l'état normal ;
pour une liaison se trouvant dans l'état d'observation et atteignant ensuite l'état exceptionnel dans la période de statistiques suivante, déclencher la liaison à réaccéder à la station de base ou à libérer ; et
pour qu'une liaison soit dans l'état d'observation et ensuite ne revienne pas à l'état normal ni n'atteigne l'état exceptionnel dans la période de statistiques suivante, réaliser en conséquence en considérant cette liaison comme se trouvant dans l'état d'observation.

9. Station de base selon la revendication 7, où la période de statistiques est un temps préétabli ou un nombre préétabli de paquets de données.

10. Station de base selon la revendication 7, où le module de traitement (53) est configuré pour, lorsque la liaison a réaccédé avec succès, réaliser à nouveau les statistiques sur les informations d'indice de performance de la liaison dans une période suivante de statistiques ; et lorsque la liaison a réaccédé sans succès, libérer directement la liaison.

11. Support de stockage informatique, stockant avec des instructions exécutables par ordinateur, **caractérisé en ce que** les instructions exécutables par ordinateur lorsqu'elles sont exécutées par des modules d'une station de base réalisent le procédé de détection et de traitement d'une anomalie de réseau selon l'une quelconque des revendications 1 à 6.
